# EUROPEAN PATENT SPECIFICATION

(11) **EP 1 491 415 B1**
(45) Date of publication and mention of the grant of the patent: **22.03.2006**
(21) Application number: 04013373.8
(22) Date of filing: 07.06.2004
(51) Int. Cl.: B60R 22/46

(54) **Seatbelt retractor**
Sicherheitsgurt-Aufroller
Enrouleur de ceinture de sécurité

(30) Priority: 27.06.2003 JP 2003184648; 15.01.2004 JP 2004007563
(43) Date of publication of application: 29.12.2004
(73) Proprietor: TAKATA CORPORATION, Minato-ku, Tokyo 106-8510 (JP)
(72) Inventor: Hiramatsu, Koji, Minato-ku Tokyo 106-8510 (JP)
(74) Representative: Banzer, Hans-Jörg

(56) References cited:
- EP-A- 0 919 747
- US-A- 5 511 739
- US-A- 5 836 534
- PATENT ABSTRACTS OF JAPAN vol. 1999, no. 08, 30 June 1999 (1999-06-30) -& JP 11 059330 A (TAKATA KK), 2 March 1999 (1999-03-02)
- PATENT ABSTRACTS OF JAPAN vol. 1998, no. 09, 31 July 1998 (1998-07-31) -& JP 10 094619 A (NISSAN MOTOR CO LTD), 14 April 1998 (1998-04-14)

## Description

### [Technical Field]

The present invention belongs to technical fields related to a seatbelt retractor for retracting and withdrawing a seatbelt. More specifically, it belongs to technical fields related to a seatbelt retractor having an energy-absorption mechanism (hereafter referred to as 'EA mechanism') for absorbing kinetic energy applied to a passenger in inertial movement. The kinetic energy is absorbed by the seatbelt when withdrawal of the seatbelt is prevented in an emergency situation such as a crash wherein a large deceleration force is applied on a vehicle while the passenger is wearing the seatbelt.

### [Background Art]

A known seatbelt apparatus included in a vehicle, such as an automobile, comprises a seatbelt retractor for retracting a seatbelt, a seatbelt retractable from the seatbelt retractor and having ends connected to a vehicle body, a buckle fixed to the vehicle body, and a tongue slidably supported by the seatbelt and engaged to the buckle.

When the passenger is not wearing the seatbelt, the seatbelt is retracted by a spool of the seatbelt retractor. After the passenger is seated in the vehicle seat, the passenger wears the seatbelt by withdrawing a predetermined length of the seatbelt from the seatbelt retractor and engaging the tongue and the buckle. When the passenger is wearing the seatbelt, the seatbelt extending from the tongue to the seatbelt retractor functions as a shoulder belt and is passed over from the passenger's shoulder to chest. The seatbelt extending from the tongue to the connection with the vehicle functions as a lap belt and is passed around the passenger's hip.

When the passenger is wearing the seatbelt, withdrawal of the seatbelt is prevented in an emergency situation by activating a lock mechanism of the seatbelt retractor and stopping the rotation of the spool in the seatbelt-withdrawal direction. The shoulder belt of the seatbelt apparatus restrains the passenger's shoulder to chest and the lap belt restrains the passenger's hip. In this way, the passenger is protected from being thrown off the seat.

A seatbelt retractor of a known seatbelt apparatus has a seatbelt for restraining and protecting a passenger in an emergency situation such as a crash. During a crash, the vehicle decelerates rapidly, and, due to the large inertia, the passenger moves forward. Therefore, a great load is applied to the seatbelt due to the passenger's kinetic energy. As a result, when the seatbelt stops the passenger from moving forward, the passenger receives a large impact from the seatbelt. This impact the passenger receives, however, is not a serious problem. Preferably, the impact energy should be absorbed to limit the force of the impact.

The seatbelt retractor of a known seatbelt apparatus has a torsion bar for absorbing the kinetic energy applied in the above-mentioned emergency situation when the passenger is wearing the seatbelt. As a result, the load applied to the seatbelt is limited.

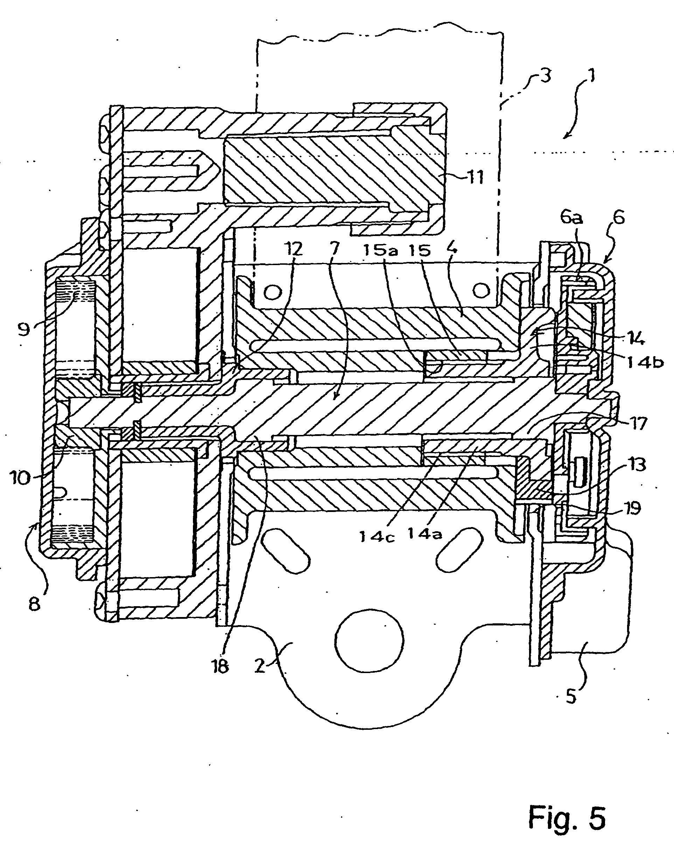

Fig. 5 is a cross-sectional view of an example of a seatbelt retractor having such a torsion bar. In the drawing, the reference numerals indicate the following: 1 indicates a seatbelt retractor; 2 indicates a U-shaped frame; 3 indicates a seatbelt; 4 indicates a spool for retracting the seatbelt 3, which is fixed rotatably between the sidewalls of the U-shaped frame 2; 5 indicates a deceleration sensing mechanism for sensing rapid deceleration of a vehicle that occurs in the above-mentioned emergency situation; 6 indicates a lock mechanism that is activated in response to the deceleration sensing mechanism 5 to prevent, at least, the spool 4 from rotating in the seatbelt-withdrawal direction; 7 indicates a torsion bar that is loosely passed through the center of the spool 4 in the axial direction and connects the spool 4 and the lock mechanism 6; 8 indicates a spring mechanism for constantly urging the spool 4 in the seatbelt-retraction direction with a bush 10 by the spring force of a spiral spring 9; 11 indicates a pretensioner that is activated in the above-mentioned emergency situation and generates torque for retracting the seatbelt; and 12 indicates a bush for transferring the torque for retracting the seatbelt generated by the pretensioner 11 to the spool 4.

The lock mechanism 6 has a locking base 14 (which is equivalent to the locking member of the present invention). The locking base 14 is fixed to and integrally rotatable with a first torque transferring shaft 17 of the torsion bar 7 and loosely supports a pawl 13. The torsion bar 7 has a locking gear 6a. Normally, the locking gear 6a integrally rotates with the torsion bar 7. In an emergency situation, the deceleration sensing mechanism 5 is activated to stop the locking gear 6a to generate a rotational difference between the locking gear 6a and the torsion bar 7. The rotational difference causes the pawl 13 to engage with an inner tooth 19 of the sidewall of the frame 2, and, thus, the rotation of the locking base 14, i.e. the spool 4, in the seatbelt-withdrawal direction is stopped.

The torsion bar 7 is engaged with the first torque-transferring shaft 17 so that it cannot be rotated relative to the locking base 14. The torsion bar 7 is also engaged with a second torque-transferring shaft 18 so that it cannot be rotated relative to the spool 4.

Moreover, a circular stopper 15 is interposed between the spool 4 and a shaft 14a of the locking base 14. A female screw 15a formed on the inner circumference of the stopper 15 is screwed together with a male screw 14c formed on the shaft 14a of the locking base 14. The stopper 15 is prevented from rotating relative to an axial hole formed on the spool 4 but is allowed to move in the axial direction of the spool 4. Rotation of the spool 4 in the seatbelt-withdrawal direction relative to the locking base 14 causes the stopper 15 to integrally rotate with the spool 4 and to move to the right in Fig. 5.

The spring force of the spring mechanism 8 constantly urges the spool 4 in the seatbelt-retraction direction against the bush 10, the torsion bar 7, the second torque-transferring shaft 18 of the torsion bar 7, and the bush 12. When the pretensioner 11 is activated, seatbelt-retraction torque generated by the pretensioner 11 is transferred to the spool 4 via the bush 12. This causes the spool 4 to retract a predetermined length of the seatbelt 3.

A known seatbelt retractor 1, as described above, keeps the seatbelt 3 retracted by the force of the spring mechanism 8 when a passenger is not wearing the seatbelt 3. When the passenger withdraws the seatbelt 3 at a normal rate to wear the seatbelt 3, the spool 4 rotates in the seatbelt-withdrawal direction and the seatbelt 3 is withdrawn smoothly. A tongue, not shown in the drawing, is slidably attached to the seatbelt 3. After the tongue is inserted and latched into a buckle fixed to the vehicle, the excess withdrawn seatbelt 3 is retracted by the spool 4 with the force of the spring mechanism 8. In this way, the seatbelt 3 fits tightly to the passenger's body so that the passenger does not feel too much pressure.

In the above-mentioned emergency situation, the pretensioner 11 transfers the generated seatbelt retraction torque to the spool 4. The spool 4 retracts a predetermined length of the seatbelt 3 and restrains the passenger quickly. When the vehicle quickly decelerates during an emergency situation, the deceleration sensing mechanism 5 is activated to activate the lock mechanism 6. More specifically, the activation of the deceleration sensing mechanism 5 prevents the rotation of the locking gear 6a in the seatbelt-withdrawal direction. Then the pawl 13 of the lock mechanism 6 rotates, and engages the pawl 13 with the inner tooth 19 of the sidewall of the frame 2. As a result, the rotation of the locking base 14 in the seatbelt-withdrawal direction is stopped, causing the torsion bar 7 to twist and the spool 4 to rotate in the seatbelt-withdrawal direction relative to the locking base 14. After this, the spool 4 rotates in the seatbelt-withdrawal direction as it twists the torsion bar 7. This twisting torque absorbs the kinetic energy of the passenger, and, consequently, the load borne by the seatbelt 3 is limited. The torsion bar 7 functions as an EA mechanism. The load of the EA mechanism (hereafter referred to as the 'EA load') limited by the torsion bar 7 characteristically becomes gradually larger as the rate of rotation of the spool 4 relative to the locking base 14 first becomes larger and then levels off.

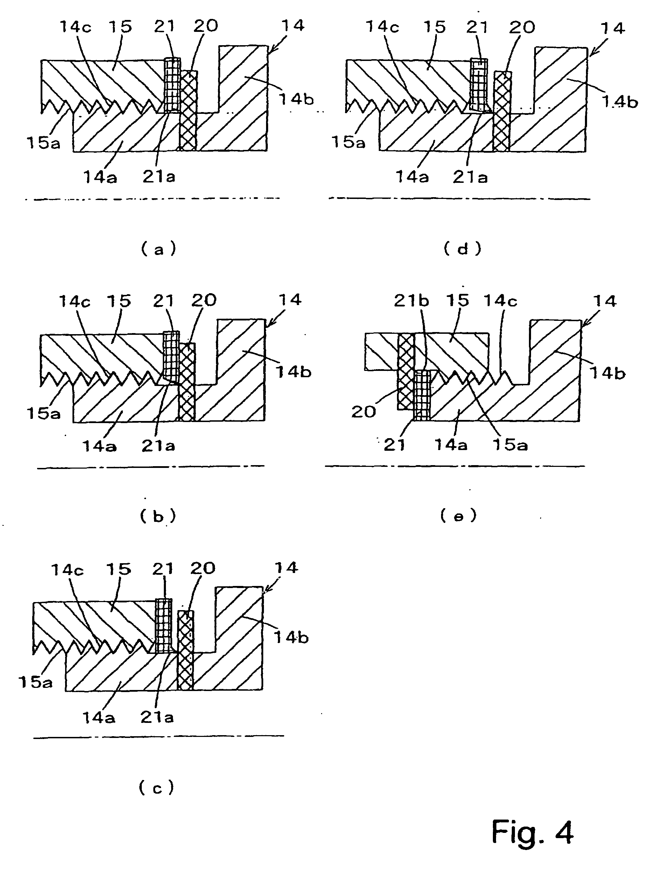

The rotation of the spool 4 in the seatbelt-withdrawal direction relative to the locking base 14 causes the stopper 15 to move to the right along the shaft, as shown in Fig. 4. Once the stopper 15 reaches the end of the male screw of the locking base 14, it cannot move any further to the right. Therefore the rotation of the stopper 15 is locked, and, thus, the stopper 15 cannot rotate relative to the locking base 14. (Sometimes, the movement of the stopper 15 in the right axial direction is stopped by the stopper 15 contacting the side of a flange 14b of the locking base 14.)

Accordingly, the spool 4 does not rotate relative to the locking base 14. More specifically, the rotation of the spool 4 in the seatbelt-withdrawal direction is locked, and the seatbelt 3 cannot be withdrawn. In this way, the seatbelt 3 stops the passenger's inertial movement.

When the seatbelt of the known seatbelt retractor is suddenly withdrawn, the locking base 14 of the lock mechanism 6 rotates in the seatbelt-withdrawal direction relative to the locking gear 6a. In this way, the pawl 13 of the lock mechanism 6 is engaged with the inner tooth 19 of the sidewall of the frame 2, as described above. As a result, the rotation of the locking base 14 is blocked, causing the rotation of the spool 4 in the seatbelt-withdrawal direction to be stopped by the torsion bar 7. Consequently, the withdrawal of the seatbelt 3 is prevented.

For the known seatbelt retractor, the torsion bar 7 is the only factor that determines the EA load. The kinetic energy on the passenger is absorbed only by this EA load. To minimize the load applied to the passenger, a minimum and constant EA load that can absorb the kinetic energy of the passenger is selected.

As described above, the known torsion bar 7 can absorb the kinetic energy of the passenger in an emergency situation. Preferably, however, the kinetic energy of the passenger should be absorbed as effectively and appropriately as possible. To effectively absorb the kinetic energy, various methods are known for providing a variable EA load.

An example of a known seatbelt retractor having an EA mechanism with a variable EA load is a seatbelt retractor having a second torsion bar disposed inside a cylindrical first torsion bar. Each of the corresponding ends on the same sides of the first and the second torsion bars are connected at least in the rotational direction (for example, refer to Japanese Unexamined Patent Application Publication No. 2000-16243 and Japanese Unexamined Patent Application Publication No. 2000-25567). When the torsion bar of the seatbelt retractor disclosed in Japanese Unexamined Patent Application Publication No. 2000-16243 and Japanese Unexamined Patent Application Publication No. 2000-25567 is twisted and deformed in an emergency situation, the first torsion bar breaks and then the second torsion bar absorbs the kinetic energy by twisting. In this way, the EA load changes in two steps.

Another example of a known seatbelt retractor including an EA mechanism with a variable EA load is a seatbelt retractor having a shaft inside a cylindrical spool, which is for retracting a webbing, and having a bifacial curved EA plate, which is interposed between the spool and the shaft, including a controller. One end of the EA plate receives the rotational force in the webbing retraction direction of the spool and the other end is fixed to the shaft (for example, refer to Japanese Unexamined Patent Application Publication No. 10-258702). In the seatbelt retractor disclosed in Japanese Unexamined Patent Application Publication No. 10-258702, the spool rotates in the webbing withdrawal direction relative to the shaft in an emergency situation. The rotational force of the spool in the webbing withdrawal direction is applied to one end of the EA plate and causes the EA plate to plastically deform. As a result, the kinetic energy is absorbed and the deformation force is changed by the controller. In other words, the amount of possible energy absorption is changed. In this way, the EA load is variable.

Moreover, another example of a known seatbelt retractor including an EA mechanism with a variable EA load is a seatbelt retractor having a torsion bar inside a spool and a stopper ring on a side of the spool (for example, refer to Japanese Unexamined Patent Application Publication No. 2000-43677). In the seatbelt retractor disclosed in Japanese Unexamined Patent Application Publication No. 2000-43677, the spool rotates relative to the pawl holder in the webbing-withdrawal direction during an emergency situation. As a result, the torsion bar is twisted, and then the engagement shoulder of the pawl holder cuts the inner circumference of the stopper ring. In this way, a large portion of the kinetic energy is absorbed. Once the cutting of the inner circumference of the stopper ring is completed, the kinetic energy is absorbed only by the twisting of the torsion bar. In this way, the EA load changes in two steps.

A seatbelt retractor according to the preamble of claim 1 is disclosed in EP-A 0919 747.

### [Problems to be Solved by the Invention]

For the EA mechanism having two torsion bars according to the above-mentioned Japanese Unexamined Patent Application Publications No. 2000-16243 and No. 2000-25567, the axial length of the torsion bar broken first is the same as the axial length of the second torsion bar, i.e. the main torsion bar. Thus, the EA load depends on the axial length of the second torsion bar. For this reason, the flexibility of EA load is low and it is difficult to set an arbitrary EA load for the second torsion bar without taking the axial length into consideration.

The EA mechanism composed of an EA plate having a controller according to Japanese Unexamined Patent Application Publication No. 10-258702 has a complex shape because the EA plate is formed of a bifacial curved surface. Moreover, the composition of the EA mechanism is complex. Because the shape of the EA plate and the composition of the EA mechanism are complex and also because the controller is formed by local curing, it is difficult to provide a stable EA load.

Moreover, for the EA mechanism using cutting according to Japanese Unexamined Patent Application Publication No. 2000-43677, it is difficult to provide a constantly stable EA load by cutting the inner circumference of the stopper ring.

In the present invention, the above-mentioned problems have been taken into consideration, and its object is to provide a seatbelt retractor that has a relatively simple structure allowing setting of a wide range of EA load with great stability.

### [Means for Solving the Problems]

For solving the above-mentioned problems, a seatbelt retractor according to the present invention comprises a spool for retracting the seatbelt; a lock mechanism having a locking member that normally rotates integrally with the spool and that stops the rotation in the seatbelt-withdrawal direction in an emergency situation; a torsion bar that is interposed between the spool and the locking member and that absorbs the kinetic energy of a passenger when the spool rotates in the seatbelt-withdrawal direction relative to the locking member in an emergency situation; and a stopper that is screwed into the shaft of the locking member, that moves in the axial direction along the shaft of the locking member by the rotation of the spool relative to the locking member, and that stops the rotation of the spool when the movement in the axial direction is stopped by the locking member. This seatbelt retractor has at least one energy-absorption member on either the stopper or the locking member interposed between the stopper and the locking member. The energy-absorption member undergoes shear deformation between the stopper and the locking member when the stopper moves in the axial direction along the shaft of the locking member.

According to an embodiment of the present invention, the at least one energy-absorption member can be columnar, prismatic, or tabular.

The torsion bar and the at least one energy-absorption member can be disposed independently.

The seatbelt retractor may have, on either the stopper or the locking member, a cutter for cutting the at least one energy-absorption member when the stopper moves along the shaft of the locking member in the axial direction.

Preferably, the cutter has an edge (cutting blade).

The seatbelt retractor according to the invention has the torsion bar and the energy-absorption member that function as a kinetic energy-absorption mechanism. The rotation of the locking member stops in an emergency situation such as a crash. Then the spool rotates in the webbing-withdrawal direction relative to the locking member because of the webbing-withdrawal load. As a result, the torsion bar twists and the stopper shear-deforms. In this way, the impact energy is absorbed by the torsion bar and the stopper. Thus, the EA load changes into two different loads: a limited load caused by the twisting of the torsion bar and the shear deformation of the energy-absorption member which is observed before the energy-absorption member undergoes shear failure; and a limited load caused by the twisting of the torsion bar which is observed after the energy-absorption member undergoes shear failure.

The seatbelt retractor according to the present invention is structured by adding the energy-absorption member to a known seatbelt retractor, and, thus, the EA mechanism with a variable EA load that has a simple structure can be produced inexpensively.

By changing the pitch of the part where the stopper and the locking base is screwed together or by changing the shape of the energy-absorption member, various EA loads can be provided, and the flexibility of EA load increases.

By providing a plurality of energy-absorption members which preferably undergo shear-deformation in sequence, the stability of the EA load increases even more.

In particular, the energy-absorption member or members can be either columnar, prismatic, or tabular. For this reason, the structure of the EA mechanism with variable EA load becomes simple, and, thus, the production cost for the EA mechanism becomes inexpensive.

Furthermore, the torsion bar and the energy-absorption member can be independently disposed. Thus, the flexibility of EA load is increased.

If the energy-absorption member is cut by a cutter, the cutting load of the energy-absorption member can be stabilized. Thus, the EA load can be stabilized, and the kinetic energy of the passenger can be efficiently absorbed.

Even when the stopper rotates relative to the locking base, the energy-absorption member can be cut without rotating the cutter. In this way, the cutting load of the energy-absorption member can be stabilized even more.

Since the cutter for cutting the energy-absorption member is formed separately from the stopper, the cutter may be composed of the optimum material for cutting the energy-absorption member regardless of the material of the stopper.

The cutting load of the energy-absorption member can be stabilized even more since the cutter has a sharp edge (cutting blade).

An embodiment of the present invention is described in the following with reference to the drawings.

### [Brief Description of the Drawings]

Fig. 1 is a cross-section view of a seatbelt retractor according to an embodiment of the present invention.
Fig. 2(a) and 2(b) show an energy-absorption pin that functions as an energy-absorption member. Fig. 2(a) shows an embodiment of an energy-absorption pin shown in Fig. 1. Fig. 2(b) shows a modification of the energy-absorption pin.
Fig. 3(a) and 3(b) show characteristics of EA loads. Fig. 3(a) shows an EA load characteristic of the embodiment shown in Fig. 1. Fig. 3(b) shows an EA load characteristic of a modification.
Fig. 4(a) to 4(e) show embodiments of a seatbelt retractor according to the present invention and is a drawing similar to Fig. 2(b).
Fig. 5 is a cross-sectional view of a seatbelt retractor having a known EA mechanism.

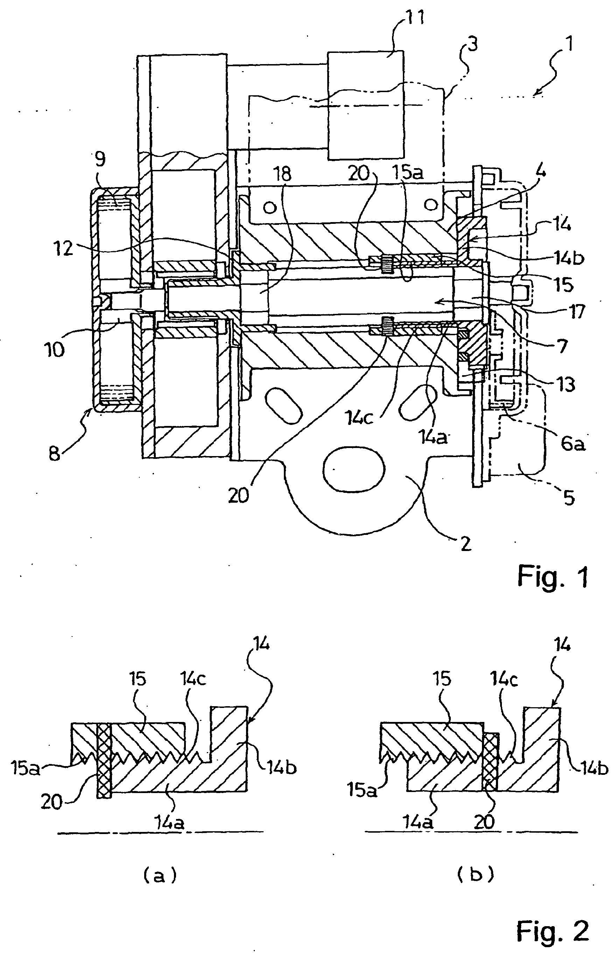

Fig. 1 is a cross-sectional view of an embodiment of a seatbelt retractor according to the present invention. In the descriptions of the embodiments below, the components that are the same as previous embodiments and the known seatbelt retractor shown in Fig. 5 are indicated by the same reference numeral as in Fig. 5 and their detailed explanation is omitted. The term 'right' and 'left' each refer to the 'right' and 'left' directions in the drawings.

As shown in Fig. 1, in a seatbelt retractor according to this embodiment, normally a stopper 15 extends leftward from the left end of a shaft 14a of a locking base 14. On the extended portion of the stopper 15, a predetermined number of columnar energy-absorption pins 20, which function as energy-absorption members (EA members), are disposed with equal intervals around the circumference of the stopper so that the pins protrude radially inwards. In this case, the energy-absorption pins 20 are disposed independently from a torsion bar 7. As shown in Fig. 2(a), the energy-absorption pins 20 are connected to the left end of the shaft 14a of the locking base 14. The seatbelt retractor according to this embodiment has an EA mechanism based on the energy-absorption pins 20 in addition to the EA mechanism based on the torsion bar 7.

The remaining structure of the seatbelt retractor according to this embodiment is the same as the known seatbelt retractor described in Fig. 5.

Similar to the known seatbelt retractor shown in Fig. 5, the seatbelt retractor according to this embodiment includes a spool 4 that rotates in the seatbelt-withdrawal direction as it twists the torsion bar 7 in an emergency situation. The twisting torque of the torsion bar 7 absorbs the kinetic energy of a passenger and limits the load applied to the seatbelt. At the same time, the stopper 15, as described above, tries to move to the right relative to the shaft 14a of the locking base 14. Therefore, shear load is applied to the energy-absorption pins 20 and the energy-absorption pins 20 gradually experience shear deformation. Then, as the shear load increases, the energy-absorption pins 20 finally undergo shear failure. The shear deformation and shear failure of the energy-absorption pins 20 also absorb the kinetic energy of the passenger, which limits the load applied to the seatbelt 3.

After the energy-absorption pins 20 have undergone shear failure, similar to the known seatbelt retractor shown in Fig. 4, the kinetic energy is absorbed only by the twisting of the torsion bar 7 and the stopper 15 moves rightward relative to the shaft 14a of the locking base 14.

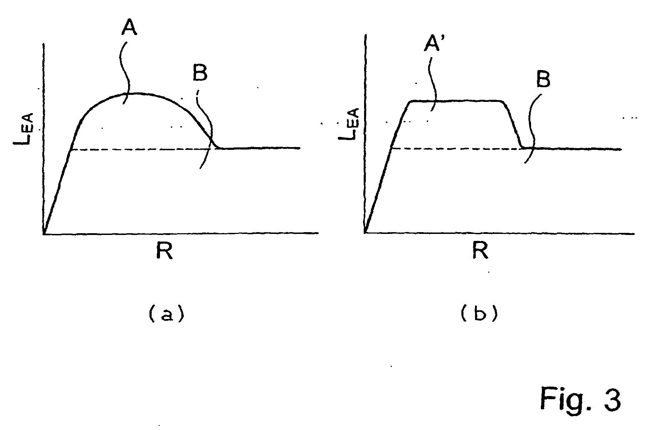

The EA load L_{EA} of the EA mechanism has the following characteristic. The EA load that is limited by the twisting of the torsion bar 7 and the shear deformation of the energy-absorption pins 20 gradually increases, as shown in Fig. 3(a), as the rotational rate R of the spool 4 relative to the locking base 14 increases. In Fig. 3(a) A denotes the EA load of the energy-absorption pins 20, whereas B denotes the EA load due to the torsion bar 7. In this case, this EA load is greater than the EA load caused by the twisting of the torsion bar 7, shown by the dotted line. As the shear deformation of the energy-absorption pins 20 increase and shear failure begins, the EA load caused by shear deformation of the energy-absorption pins 20 gradually decreases. Once the energy-absorption pins 20 undergo complete shear failure, the EA load is caused by the twisting of the torsion bar 7, which is the same as in the case of the known seatbelt retractor shown in Fig. 5.

Other operations of the seatbelt retractor according to this embodiment are the same as the known seatbelt retractor depicted in Fig. 5.

According to the seatbelt retractor according to this embodiment, the EA load can be changed into two different types of load: a limited load caused by the twisting of the torsion bar 7 and the shear deformation of the energy-absorption pins 20; and a limited EA load caused only by the twisting of the torsion bar 7.

The seatbelt retractor according to this embodiment is formed by adding the energy-absorption pin 20 to a known seatbelt retractor. Thus, a relatively simple and inexpensive EA mechanism with a variable EA load can be produced.

By changing the pitch of the female screws 15a of the stopper 15 and the male screws of the locking base 14 or by changing the diameter of the energy-absorption pins 20, the flexibility of EA load increases. In particular, the flexibility of EA load becomes even larger by disposing the torsion bar 7 and the energy-absorption pins 20 independently.

Since the energy-absorption pin 20 undergo shear deformation in sequence, the stability of the EA load increases even more.

Other effects of the seatbelt retractor according to this embodiment are the same as the known seatbelt retractor depicted in Fig. 5.

In the embodiment described above, the energy-absorption pins 20 are disposed on the stopper 15 and are connected to the left end of the shaft 14a of the locking base 14. However, as shown in Fig. 2(b), it is also possible to dispose the energy-absorption pins 20 on the shaft 14a of the locking base 14 and connect them to the right end of the stopper 15. Furthermore, in the embodiment described above, the energy-absorption pins 20 are connected to the shaft 14a of the locking base 14 from the beginning. However, it is possible to keep, at first, the energy-absorption pins 20 away from the left end of the shaft 14a of the locking base 14. Then after the stopper 15 moves a predetermined distance towards the right, relative to the shaft 14a of the locking base 14, the energy-absorption pins 20 can be connected to the left end of the shaft 14a of the locking base 14 to start shear deformation of the energy-absorption pins 20. In this way, an EA load with many different characteristics may be provided.

The energy-absorption pins 20 may be prismatic instead of columnar. Also the cross-sectional area of the shear-deformed portion of the energy-absorption pins 20 can be a different shape compared to the cross-sectional areas of other parts. In other words, the cross-sectional area of the shear-deformed portion may be larger or smaller compared to other parts.

Instead of using the energy-absorption pins 20 as EA members, a plate may be used. The characteristic of the EA load when a plate is used is shown in Fig. 3(b). In this case, the EA load becomes almost constant after reaching a maximum load. In Fig. 3(b), the EA load due to the plate is denoted by A', and the EA load due to the torsion bar 7 is denoted by B.

Figs. 4 (a) to 4 (e) are similar to Fig. 2(a) or 2 (b) and illustrate other various embodiments according to the present invention.

In the above-mentioned embodiment, a plurality of energy-absorption pins 20 are mounted on the stopper 15 or the locking base 14. These energy-absorption pins 20 undergo shear deformation or shear failure due to the relatively rotating locking base 14 or stopper 15. However, as shown in embodiments illustrated in Figs. 4(a) to 4(e), energy-absorption pins 20 are cut (sheared) by a cutter 21.

In the embodiment illustrated in Fig. 4(a), an energy-absorption pin 20 is mounted on a shaft 14a of a locking base 14. Also, a ring cutter 21 (equivalent to the cutter according to the present invention) is fit onto the shaft 14a and is interposed between a male screw 14c of the locking base 14 and the energy-absorption pin 20 so that the cutter 21 is movable in the axial direction of the locking base 14. An inner edge 21a of the ring cutter 21 adjacent to the energy-absorption pin 21 is a cutting blade for cutting (shearing) the energy-absorption pin 20.

The other structures of the seatbelt retractor according to this embodiment are the same as the above-mentioned seatbelt retractor.

When the locking base 14 and the stopper 15 relatively rotate, the ring cutter 21 is pressed by the stopper 15 towards the right in the drawing. In this way, the cutter 21 moves to the right and its inner edge 21a cuts (shears) the energy-absorption pin 20. As a result, the kinetic energy of the passenger is absorbed.

According to the seatbelt retractor of this embodiment, the energy-absorption pin 20 is cut by the inner edge 21a of the cutter 21. Thus, the cutting load of the energy-absorption pin 20 is stabilized. In this way, the EA load can be stabilized, and the kinetic energy of the passenger can be efficiently absorbed.

Even when the stopper 15 rotates relative to the locking base 14, the energy-absorption member can be cut without rotating the inner edge 21a by moving the cutter 21 in the axial direction without rotation. In this way, the cutting load of the energy-absorption member can be stabilized even more.

Since the cutter 21 for cutting the energy-absorption pin 20 is formed separately from the stopper 15, the cutter 21 may be composed of a material most suitable for cutting the energy-absorption pin 20 regardless of the stopper material.

The other effects of the seatbelt retractor according to this embodiment are the same as the above-mentioned embodiment.

In an embodiment illustrated in Fig. 4(b), the inner circumference of a ring cutter 21 is ramped with respect to the axial direction and the inner edge 21a of the cutter 21 is formed at a sharper angle than the angle of the embodiment illustrated in Fig. 4(a). In this way, the cutting load of the energy-absorption pin 20 can be stabilized even more as compared to the cutting load of the embodiment illustrated in Fig. 4(a).

The other structures and effects of the seatbelt retractor according to this embodiment are the same as the embodiment illustrated in Fig. 4(a).

In comparison with the embodiment illustrated in Fig. 4(a), an embodiment illustrated in Fig. 4(c) has an inner edge 21a of a ring cutter 21 that projects in the axial direction towards an energy-absorption pin 20. In this case, the inner circumference of the cutter 21 is formed in parallel with the peripheral surface of a shaft 14a of a locking base 14, and the inner edge 21a is formed at an acute angle. Since the inner circumference of the cutter 21 is formed in parallel with the shaft 14a of the locking base 14, the cutter 21 can be moved more smoothly in the axial direction. Thus, the cutting of the energy-absorption pin 20 can be assured even more compared to the cutting in the embodiment illustrated in Fig. 4(b).

The other structures.and effects of the seatbelt retractor according to this embodiment are the same as the embodiment illustrated in Fig. 4(a).

In an embodiment illustrated in Fig. 4(d), the inner circumference of a ring cutter 21 is ramped in respect to the axial direction and the inner edge 21a of the cutter 21 is formed at a sharper angle than the angle of the embodiment illustrated in Fig. 4(c). In this way, the cutting load of the energy-absorption pin 20 can be stabilized even more than the cutting load of the embodiment illustrated in Fig. 9 (c).

The other structures and effects of the seatbelt retractor according to this embodiment are the same as the embodiment illustrated in Fig. 4(a).

The embodiments illustrated in Figs. 4(a) to 4(d) have a locking base 14 on an energy-absorption pin 20 and has a ring cutter 21 fit onto the locking base 14. On the other hand, an embodiment illustrated in Fig. 4(e) has an energy-absorption pin 20 on a stopper 15 and has a ring cutter 21, which is interposed between the energy-absorption pin 20 and the left end of a shaft 14a of a locking base 14, fit onto the stopper 15. In this case, the peripheral edge 21b of the ring cutter 21 adjacent to the energy-absorption pin 20. is a cutting blade for cutting (shearing) the energy-absorption pin 20. In the embodiment illustrated in Fig. 4(e), similar to the embodiment illustrated in Fig. 4(a), the peripheral surface of the cutter 21 is formed in parallel with the inner circumference of the stopper 15, and the peripheral edge 21b is formed at a right angle. The peripheral edge 21b, however, may be formed at an acute angle as same as the inner edge 21a of the embodiments illustrated in Figs. 4(a) to 4(d).

The other structures and effects of the seatbelt retractor according to this embodiment are substantially the same as the embodiment illustrated in Fig. 4(a) or 4(d).

The seatbelt retractor according to the present invention is mounted on a vehicle such as an automobile to allow withdrawal and retraction of a seatbelt. The seatbelt retractor is suitable for use in an emergency situation such as a crash in which a large deceleration force is applied on the vehicle while a passenger is wearing the seatbelt having an EA mechanism for absorbing kinetic energy applied to the passenger in inertial movement by preventing the withdrawal of the seatbelt.

## Claims

1. A seatbelt retractor comprising:
a spool (4) for retracting the seatbelt (3);
a lock mechanism (6) having a locking member (14), wherein the locking mechanism (6) normally rotates integrally with the spool (4) and stops the rotation in the seatbelt-withdrawal direction in an emergency situation;
a torsion bar (7) interposed between the spool (4) and the locking member (14), wherein the torsion bar (7) absorbs the kinetic energy of a passenger when the spool (4) rotates in the seatbelt-withdrawal direction relative to the locking member (14) in an emergency situation; and
a stopper (15) screwed into a shaft (14a) of the locking member (14);
wherein the stopper (15) moves in the axial direction along the shaft (14a) of the locking member (14) by the rotation of the spool (4) relative to the locking member (14), and the stopper (15) stops the rotation of the spool (4) when the movement in the axial direction is stopped by the locking member (14);
**characterized in that**
at least one energy-absorption member (20) is disposed on either the stopper (15) or the locking member (14), wherein the at least one energy-absorption member (20) is interposed between the stopper (15) and the locking member (14) and undergoes shear deformation between the stopper (15) and the locking member (14) when the stopper (15) moves in the axial direction along the shaft (14a) of the locking member (14).

2. A seatbelt retractor according to claim 1, wherein the at least one energy-absorption member (20) is either columnar, prismatic, or tabular.

3. A seatbelt retractor according claim 1 or 2, having the torsion bar (7) and the at least one energy-absorption member (20) disposed independently.

4. A seatbelt retractor according to any one of claims 1 to 3, having a cutter (21) for cutting the at least one energy-absorption member (20) when the stopper (15) moves along the shaft (14a) of the locking member (14), the cutter (21) being mounted on either the stopper (15) or the locking member (14).

5. A seatbelt retractor according to claim 4, wherein the cutter (21) has an edge, in particular a cutting blade (21a; 21b).

6. A seat belt retractor according to any one of the preceding claims, wherein a plurality of energy-absorption members (20) is provided.

## Patentansprüche

1. Sicherheitsgurtaufroller umfassend:
eine Spule (4) zum Aufrollen des Sicherheitsgurtes (3);
einen Verriegelungsmechanismus (6) mit einem Verriegelungsteil (14), wobei sich der Verriegelungsmechanismus (6) normalerweise zusammen mit der Spule (4) dreht und in einer Notsituation die Drehung in der Sicherheitsgurtentnahmerichtung anhält;
einen zwischen der Spule (4) und dem Verriegelungsteil (14) angeordneten Drehstab (7), wobei der Drehstab (7) die kinetische Energie eines Insassen absorbiert, wenn sich die Spule (4) in einer Notsituation in der Sicherheitsgurtentnahmerichtung relativ zu dem Verriegelungsteil (14) dreht; und
einen in einen Schaft (14a) des Verriegelungsteils (14) geschraubten Stopper (15);
wobei sich der Stopper (15) entlang des Schafts (14a) des Verriegelungsteils (14) durch die Drehung der Spule (4) relativ zu dem Verriegelungsteil (14) in axialer Richtung bewegt, und wobei der Stopper (15) die Drehung der Spule (4) anhält, wenn die Bewegung in axialer Richtung durch das Verriegelungsteil (14) angehalten wird;
**dadurch gekennzeichnet,**
**dass** mindestens ein Energieabsorptionsteil (20) an entweder dem Stopper (15) oder dem Verriegelungsteil (14) angeordnet ist, wobei das mindestens eine Energieabsorptionsteil (20) zwischen dem Stopper (15) und dem Verriegelungsteil (14) angeordnet ist und eine Scherungsverformung zwischen dem Stopper (15) und dem Verriegelungsteil (14) erfährt, wenn sich der Stopper (15) in axialer Richtung entlang des Schafts (14a) des Verriegelungsteils (14) bewegt.

2. Sicherheitsgurtaufroller nach Anspruch 1, wobei das mindestens eine Energieabsorptionsteil (20) entweder säulenförmig, prismatisch oder tafelförmig ist.

3. Sicherheitsgurtaufroller nach Anspruch 1 oder 2, wobei der Drehstab (7) und das mindestens eine Energieabsorptionsteil (20) unabhängig voneinander angeordnet sind.

4. Sicherheitsgurtaufroller nach einem der Ansprüche 1-3, mit einer Schneide (21) zum Schneiden des mindestens einen Energieabsorptionsteils (20), wenn sich der Stopper (15) entlang des Schafts (14a) des Verriegelungsteils (14) bewegt, wobei die Schneide (21) entweder an dem Stopper (15) oder dem Verriegelungsteil (14) angebracht ist.

5. Sicherheitsgurtaufroller nach Anspruch 4, wobei die Schneide (21) eine Kante aufweist, insbesondere eine Schneidklinge (21a; 21b).

6. Sicherheitsgurtaufroller nach einem der vorangegangenen Ansprüche, wobei mehrere Energieabsorptionsteile (20) vorgesehen sind.

## Revendications

1. Un enrouleur de ceinture de sécurité, comprenant :
- une bobine (4) pour enrouler la ceinture de sécurité (3) ;
- un mécanisme de verrouillage (6) comprenant un organe de verrouillage (14), dans lequel le mécanisme de verrouillage (6) tourne normalement solidairement avec la bobine (4) et cesse de tourner dans le sens d'enroulement de la ceinture en situation d'urgence ;
- une barre de torsion (7), interposée entre la bobine (4) et l'organe de verrouillage (14), dans lequel la barre de torsion (7) absorbe l'énergie cinétique d'un passager lorsque la bobine (4) tourne dans le sens de l'enroulement de ceinture par rapport à l'organe de verrouillage (14), en une situation d'urgence ; et
- un organe d'arrêt (15), vissé sur un arbre (14a) de l'organe de verrouillage (14) ;
dans lequel l'organe d'arrêt (15) se déplace dans le sens axial le long de l'arbre (14a) de l'organe de verrouillage (14), sous l'effet de la rotation de la bobine (4) par rapport à l'organe de verrouillage (14), et l'organe d'arrêt (15) stoppe la rotation de la bobine (4) lorsque le déplacement en direction axiale est stoppé par l'organe de verrouillage (14) ;
**caractérisé en ce que**
au moins un organe d'absorption d'énergie (20) est disposé soit sur l'organe d'arrêt (15) soit sur l'organe de verrouillage (14), dans lequel le au moins un organe d'absorption d'énergie (20) est interposé entre l'organe d'arrêt (15) et l'organe de verrouillage (14) et est soumis à une déformation par cisaillement, entre l'organe d'arrêt (15) et l'organe de verrouillage (14), lorsque l'organe d'arrêt (15) se déplace dans la direction axiale le long de l'arbre (14a) de l'organe de verrouillage (14).

2. Un enrouleur de ceinture de sécurité selon la revendication 1, dans lequel le au moins un organe d'absorption d'énergie (20) est de forme colonnaire, prismatique, ou tabulaire.

3. Un enrouleur de ceinture de sécurité selon la revendication 1 ou 2, comprenant la barre de torsion (7) et le au moins un organe d'absorption d'énergie (20), disposés indépendamment.

4. Un enrouleur de ceinture de sécurité selon l'une quelconque des revendications 1 à 3, comprenant un découpeur (21) devant couper le au moins un organe d'absorption d'énergie (20) lorsque l'organe d'arrêt (15) se déplace le long de l'arbre (14a) de l'organe de verrouillage (14), le découpeur (21) étant monté soit sur l'organe d'arrêt (15) soit sur l'organe de verrouillage (14).

5. Un enrouleur de ceinture de sécurité selon la revendication 4, dans lequel le découpeur (21) comprend un bord, en particulier une lame de coupe (21a ; 21b).

6. Un enrouleur de ceinture de sécurité selon l'une quelconque des revendications précédentes, dans lequel sont prévus une pluralité d'organes d'absorption d'énergie (20).
